# EUROPÄISCHE PATENTANMELDUNG

(11) **EP 3 599 402 A1**
(43) Veröffentlichungstag der Anmeldung: **29.01.2020**
(21) Anmeldenummer: 18185431.6
(22) Anmeldetag: 25.07.2018
(51) Int. Cl.: F16K 31/126, F16K 37/00

(54) **STEUERLUFTANSCHLUSS EINER PNEUMATIKEINHEIT**

(71) Anmelder: SISTO Armaturen S.A., 6468 Echternach (LU)
(72) Erfinder: SCHAAL, Andreas, 6468 Echternach (LU)
(74) Vertreter: Graf, Hans

(57) **Zusammenfassung**

Steuerluftanschluss einer Pneumatikeinheit, wobei der Steuerluftanschluss mindestens ein Mittel zur Datenerfassung, insbesondere durch mindestens einen Sensor, und mindestens ein Mittel zum Datenaustausch umfasst, wobei das Mittel zur Datenerfassung Zustandsgrößen innerhalb und/oder außerhalb der Steuerluft und/oder an benachbarten Bauteilen erfasst.

## Beschreibung

Die Erfindung betrifft einen Steuerluftanschluss einer Pneumatikeinheit und ein Verfahren zur Überwachung eines Steuerluftanschlusses.

Anlagen umfassen oftmals eine Anzahl von Prozessventilen, die häufig mit entsprechenden pneumatischen Stellantrieben versehen sind. In diesen wird ein Stellglied bewegt, indem ein druckbehaftetes Medium zu oder abgeführt wird. Die Versorgung einer derartigen Pneumatikeinheit mit druckbehaftetem Medium erfolgt über sogenannte Steuerluftanschlüsse.

Druckluft ist in der Prozesstechnik ein einfacher aber hochwertiger Energieträger, der sich vielseitig im Bereich der mechanischen Steuerung einsetzen lässt. Die Qualität der Druckluft ist ebenso ein wesentlicher Faktor wir die Dichtheit eines Systems. Zwar werden Pneumatikeinheiten gerne dort eingesetzt, wo es wichtig ist, dass bei Leckagen keine störenden Stoffe austreten, aber genau dies führt auch zu einem nachlässigen Umgang mit Leckagen, was zu einem erheblichen unnötigen Energieverbrauch in Anlagen führen kann.

Die EP 2 984 533 A2 zeigt einen Stellantrieb für ein Ventil mit integrierter Sensorik.

Die EP 1 632 679 A1 beschreibt eine Pneumatikeinheit mit einem Steuerluftanschluss die sich in unterschiedlichen Lagen einbauen lässt.

Aufgabe der Erfindung ist es, einen Steuerluftanschluss für eine Pneumatikeinheit zu schaffen, der es ermöglicht, im laufenden Betrieb Prozess- und Zustandsgrößen zu erfassen. Dies wird erreicht, dadurch, dass bei dem Steuerluftanschluss einer Pneumatikeinheit, der Steuerluftanschluss mindestens ein Mittel zur Datenerfassung aufweist, insbesondere mindestens einen Sensor, und mindestens ein Mittel zum Datenaustausch umfasst, wobei das Mittel zur Datenerfassung Zustandsgrößen innerhalb und/oder außerhalb der Steuerluft und/oder an benachbarten Bauteilen erfasst.

Von Vorteil ist dabei, dass der Steuerluftanschluss von Pneumatikeinheiten im Allgemeinen oder pneumatischen Antrieben im Speziellen überwachbar ist. Die Überwachung durch die Sensoren bezieht sich auf den erforderlichen Steuerdruck und die Druckluftqualität der nachgeschalteten Einheiten genauso wie auf die Erkennung von Fehlzuständen. Damit wird bei universellen Pneumatikeinheiten eine Funktionsüberwachung, vorbeugende Instandhaltung und Energiemonitoring ermöglicht. Integraler Bestandteil der Erfindung ist die drahtlose Kommunikation durch das Mittel zum Datenaustausch im Sinne des Internet der Dinge, speziell des industriellen Internet der Dinge, die eine einfache, flächendeckende Installation ermöglicht.

In einer vorteilhaften Ausgestaltung der Erfindung werden die Prozess- und Zustandsgrößen mittels mindestens einem Sensor erfasst. Als Sensoren bieten sich in vorteilhafter Weise Sensoren zur Erfassung von Temperatur, Druck, Feuchtigkeit, Ölgehalt, Schwingungen, insbesondere Schall und/oder Durchfluss an. Diese stellen die wesentlichen Prozess- und Zustandsgrößen im Pneumatiksystem dar, aus denen sich Rückschlüsse auf den Zustand des Systems ziehen lassen. Insbesondere kann der erforderliche Steuerdruck und die Qualität der Druckluft überwacht werden. Die vorgenannten Messwerte können von jeweils einem Sensor für einen Messwert oder einem gemeinsamen Sensoren, beispielsweise einem sogenannten Umweltsensor, erfasst werden.

Ein Durchflusssensor dient zur Erkennung von Leckagen, die Fehlfunktionen der Pneumatikeinheiten und pneumatische Energieverluste verursachen können. Da die genaue Messung des Durchflusses zur Leckageerkennung nicht erforderlich ist, reicht ein einfaches Mikrofon oder sonstiger Schallsensor zur Erkennung einer Leckage aus. Es könnten jedoch auch Durchflusssensoren im eigentlichen Sinn zum Einsatz kommen, die den expliziten Durchfluss erfassen.

In einer weiteren vorteilhaften Ausgestaltung der Erfindung werden die Umgebungsbedingungen, wie Temperatur, Luftdruck und Luftfeuchtigkeit, von einzelnen Sensoren oder einem Umweltsensor erfasst und überwacht, wobei mindestens ein paralleler Sensor Zustandsgrößen der Umgebung aufnimmt. Außerdem kann diese zusätzliche Überwachungseinheit ebenfalls über Sensoren zur Schwingungserkennung verfügen. Unregelmäßigkeiten in der Anlage lassen sich von der Position des Steuerluftanschlusses überwachen, soweit sie einen Einfluss bis in seien Messbereich haben. Beispielsweise könnte ein Gassensor die Steuerluft überwachen und gefährliche Gase erkennen.

In einer weiteren Ausführungsvariante sind Sensoren in den Steuerluftanschluss integriert, die den Zustand des Bauteils an sich erfassen. Belastungs- und vor allem Überlastungszustände des Steuerluftanschlusses lassen sich somit ermitteln.

In einer weiteren Ausgestaltung der Erfindung ist das Mittel zur Datenübertragung ein Funkkommunikationsmittel, insbesondere ein Nahfeldfunkmittel. Die drahtlose Kommunikation ist integraler Bestandteil des erfindungsgemäßen Steuerluftanschlusses. Es ist sowohl eine Nahfeld-Kommunikation über RFID, Bluetooth LE, Thread, Zigbee oder Ähnlichem vorzusehen, als auch eine Fernfeld-Kommunikation über WiFi, LPWan oder Mobilfunk-Standards wie GSM, LTE oder Ähnlichem. Um die Konnektivität zu erhöhen, können auch mehrere Technologien kombiniert werden.

Die Energieversorgung erfolgt bei dem erfindungsgemäßen Datenerfassungs- und Kommunikationssystem kabellos beispielsweise über eine Versorgungsbatterie. Es ist jedoch auch denkbar, dass die Datenerfassungseinheit die benötigte Energie aus der Funkschnittstelle entnimmt. Weiterhin wäre eine Eigenversorgung der Überwachungseinheit durch Energy Harvesting wünschenswert. Zur Energiegewinnung sind beispielsweise Temperaturunterschiede zwischen Steuerluft und Umgebungsluft, Vibrationen oder die Ventilbewegung genutzt werden.

Eine besonders geeignete Möglichkeit ist die Energiegewinnung aus der beim Schalten des Ventils durchströmenden Druckluft, die eine in die Überwachungseinheit integrierte Turbine antreibt und mit einem Generator die Versorgungsenergie für die Elektronik bereitstellt. Eine eingebaute Batterie oder Akku kann dazu dienen, lange Phasen ohne Energiegewinnung zu überbrücken. Gleichzeitig kann bei dieser Variante die Drehzahl der Turbine als Durchflusssensor genutzt werden.

Die drahtlose Datenübertragung und die kabellose Energieversorgung ermöglicht die einfache, flächendeckende Installation in industriellen Anlagen. Es ist jedoch auch vorstellbar, dass in einer einfachen Ausführungsvariante die Daten- und/oder Energieversorgung kabelgebunden erfolgt.

Die Möglichkeit des nachträglichen Einbaus mindestens einer Überwachungseinheit wird durch standardisierte Anschlussgewinde vereinfacht. Die Überwachungseinheit besitzt zwei pneumatische Anschlüsse, einen Versorgungsanschluss und einen Verbraucheranschluss, wobei es auch mehrere Verbraucheranschlüsse geben kann. In einer Ausführung besitzt die Überwachungseinheit am Verbraucheranschluss ein Außengewinde, das direkt in einen pneumatischen Antrieb eingeschraubt werden kann.

Durch die Miniaturisierung der beteiligten Elektronikkomponenten ist es weiter möglich, Sensoren auf Satelliten in direkter Umgebung des Steuerluftanschlusses zu platzieren, wobei diese beispielsweise mittels RFID Technik zur Energie und Datenübertragung miteinander verbunden sind. Hier bieten sich als Anbringungsort das Ventilgehäuse, die Membran, die Leitungen oder die Kolbenstange des Pneumatikantriebes an. Wahlweise sind diese Satelliten auch kabelgebunden auszulegen.

Der Einsatz des erfindungsgemäßen Steuerluftanschlusses mit einer Überwachungseinheit kann einzeln oder durch Zusammenschaltung mehrerer dieser Einheiten erfolgen. Es ist beispielsweise vorstellbar, dass bei Auf-Zu-Antrieben beide Steuerluftanschlüsse überwacht werden und die beiden Einheiten miteinander kommunizieren. Dies kann in diesem Beispiel oder im Allgemeinen dazu dienen, die Plausibilität der Signale zu prüfen oder die Zuverlässigkeit durch Redundanz zu erhöhen. Außerdem ist es möglich, dass am Verbraucheranschluss nicht ein einzelner Pneumatikverbraucher angeschlossen ist, sondern mehrere Pneumatikeinheiten, sodass die Überwachung eines Pneumatik-Netzes ermöglicht wird. Zur Analyse der aufgenommenen Prozess- und Zustandsgrößen ist in einer weiteren vorteilhaften Ausgestaltung der Erfindung eine Auswerteeinheit vorgesehen, wobei die Auswerteeinheit Regeln zur Datenanalyse umfasst. Diese Regeln ermöglichen die Erkennung von Soll Zuständen in dem überwachten Steuerluftanschluss oder einem entsprechenden Pneumatik-Netz aus mehreren Steuerluftanschlüssen ebenso wie die Erkennung von abweichenden Zuständen.

Weiter ist es Aufgabe der Erfindung ein Verfahren zur Überwachung eines Steuerluftanschlusses zu schaffen, welches auf einfache und kostengünstige Weise den ordnungsgemäßen Betrieb des Steuerluftanschlusses und der damit verbundenen Pneumatikeinheit überwacht. Dies wird erfindungsgemäß gelöst durch ein Verfahren bei dem der genannte Steuerluftanschluss mit den Mitteln zur Datenerfassung mindestens eine Zustandsgröße in oder an dem Steuerluftanschluss aufnimmt und mittels der Mittel zur Datenübertragung an eine übergeordnete Steuereinheit überträgt. Die übergeordnete Steuereinheit kann eine im Steuerluftanschluss befindliche Auswerteeinheit sein oder wie oben beschrieben eine in einem Netzwerk aus mehreren Steuereinheiten angeordnete.

In einer Ausgestaltung des Verfahrens werden die erfassten Daten in einer Auswerteeinheit ausgewertet und das Auswerteergebnis mittels der Mittel zur Datenübertragung an eine zentrale Steuereinheit übertragen. Dies hat den Vorteil, dass die Menge der zu übertragenden Daten reduziert wird.

In einer weiteren Ausgestaltung des Verfahrens werden in der Auswerteeinheit Anomalien gegenüber einem hinterlegten Verhalten erfasst. In der Auswerteeinheit können Zustände oder Betriebsverläufe einer Pneumatikeinheit oder der Arbeitsluft hinterlegt sein. Dies ermöglicht eine konkrete Rückmeldung eines Zustandes "Normaler Betrieb" oder "nicht-normaler Betrieb", wodurch die Datenübertragung noch weiter reduziert wird. Mit den erfassten Sensorwerten, wie Steuerdruck oder Durchfluss ist es möglich, bei Kenntnis des angeschlossenen Pneumatikverbrauchers, dessen korrekte Funktion sowie dessen aktuellen Betriebszustand zu ermitteln. Bei Pneumatikantrieben kann so in Abhängigkeit des Typs (Schließfeder, Offenfeder, Auf-Zu-Antrieb) die Schaltstellung ermittelt werden. Bei Kenntnis der Wirkfläche eines angeschlossenen pneumatischen Linearantriebs kann über den gemessenen Druck die resultierende Antriebskraft berechnet werden. Bei Kenntnis der Übertragungsfunktion eines angeschlossenen pneumatischen Motors kann über den gemessenen Durchfluss dessen Ausgangsdrehzahl sowie unter Einbeziehung des Steuerdrucks das Ausgangsmoment berechnet werden.

Insbesondere weist in einer weiteren Ausgestaltung die Auswerteeinheit einen Datenspeicher für Kenndaten des Antriebs und/oder des betätigten Bauteils auf. Dies ermöglicht den "normalen" Betrieb genau vorzugeben, wodurch sich Abweichungen deutlich identifizieren lassen. Insbesondere wird weiter mit dem Verfahren eine Analyse durchgeführt, die geringfügige und/oder dauerhaft wirkende und/oder kurzzeitige intensive und/oder schwellende und/oder strukturiert auftretende Anomalien erfasst, die im normalen Betrieb nicht vorkommen. Neben Störungen die durch eine fehlerhafte übergeordnete Steuerung bedingt sind können auf diese Weise auch unvorhergesehene Eingriffe Dritter festgestellt werden.

Die gemessenen Werte können lokal zwischengespeichert oder aber über die Kommunikationsschnittstelle in eine Cloud gesichert werden. Zur Reduzierung des Speicherbedarfs ist es sinnvoll, dass aus den Messdaten die erforderlichen Ausgabewerte berechnet werden und die Rohdaten anschließend gelöscht werden. Zur Reduzierung des Energiebedarfs kann der Erfassungsabstand (Abtastrate) entsprechend des Anwendungsfalls angepasst werden. Beispielsweise kann vorteilhaft der Anstieg eines Sensorwerts erfasst und von der Steuerung als Wake-Up-Event verwendet werden, um nur während eines Schaltvorgangs Daten zu messen. Entsprechend kann der Abstand der Datenübertragung gleich oder größer als die Abtastrate gewählt werden.

Die gezielte Beeinflussung oder Zerstörung einer Anlage oder der darin hergestellten Erzeugnisse ist ein Mittel bei Cyberangriffen. Bei Cyberattacken handelt es sich um gezielte Angriffe auf eine spezifische Infrastruktur wichtiger Rechnernetze von außen. Solche Rechnernetzwerke werden auch zunehmend zur Steuerung von Anlagen eingesetzt.

Greifen Hacker über Cyberattacken Industrieanlagen an, so ist ein erster Schritt, Stromzufuhren gezielt zu unterbrechen. Für Angriffe, die differenzierter wirken als ein generelles Abschalten ist ein komplexeres Vorgehen erforderlich. Zielt man auf konkrete Prozesse, wird dafür ein genaues Wissen über deren Aufbau und Regelung benötigt. Alle Prozesse mit Fluiden weisen aber strömungsführende Einrichtungen mehr oder minder standardisierter Bauarten auf, die in der Breite identifizierbarer und strukturierter angreifbar sind als gesamte Prozesse.

Erfindungsgemäß werden zunächst Sollzustände, insbesondere der Pneumatikeinheit in der Anlage vorgegeben und vergleichbare Messgrößen im laufenden Betrieb erfasst. Je nach Art des angeschlossenen Verbrauchers kann eine individuelle Funktions-Kennlinie genutzt werden, um Fehlfunktionen oder einen abweichenden Zustand von Komponenten zu ermitteln. Im Rahmen einer Initialisierung erfolgt die Messung einer Referenz-Kennlinie, die den Zustand "Gut" repräsentiert bei definierten Mess-Bedingungen. Im nachfolgenden Betrieb kann bei gleichen Mess-Bedingungen kontinuierlich in regelmäßigen Zeitabständen oder auf Aufforderung eine Ist-Kennlinie aufgenommen werden, die mit der Referenz-Kennlinie verglichen wird. Bei pneumatischen Linearantrieben kann auf diese Weise beispielsweise während eines Schaltvorgangs eine erhöhte Reibung an den Dichtflächen erkannt werden. Die Erfassung erfolgt mithilfe unterschiedlicher Sensoren, wie oben beschrieben durch Akustik-, Schwingungs-, Druck-, Durchfluss- oder Temperatursensoren. Die Signale werden an die Auswerteeinheit weitergeleitet, in der Einheit werden Soll- und Ist Größen miteinander verglichen werden. Kommt es zu erheblichen Abweichungen bzw. werden vorgegebene Grenzwerte über- bzw. unterschritten kann die Auswerteeinheit anhand der Auswertung der Signale feststellen, ob ein Cyberangriff auf die Pneumatikeinheit stattgefunden hat. In diesem Fall reagiert die Auswerteeinheit und meldet eine Störung an eine übergeordnete Steuerung. Eventuell ist es noch möglich bei der Pneumatikeinheit einen sicheren Zustand einzustellen.

Auf diese Weise wird eine Zustandsüberwachung angeschlossener Einheiten im Umfeld des Steuerluftanschlusses des Pneumatikverbinders ermöglicht. Dies umfasst die Überwachung des Betriebszustands, Erkennung von Fehlfunktionen oder Störungen sowie die Ausgabe von entsprechenden Meldungen und Wartungsempfehlungen. Außerdem wird eine Lebensdauerprognose der angeschlossenen Einheiten und derer Komponenten ermöglicht, deren Qualität durch die gemessenen Daten laufend verbessert werden kann.

Weitere Merkmale und Vorteile der Erfindung ergeben sich aus der Beschreibung von Ausführungsbeispielen anhand von Zeichnungen und aus den Zeichnungen selbst. Dabei zeigt:
- Figur 1: eine Sensoranordnung,
- Figur 2: ein Membranventil mit einem Sensor
- Figur 3: Einbaulagen des Sensors am Membranventil

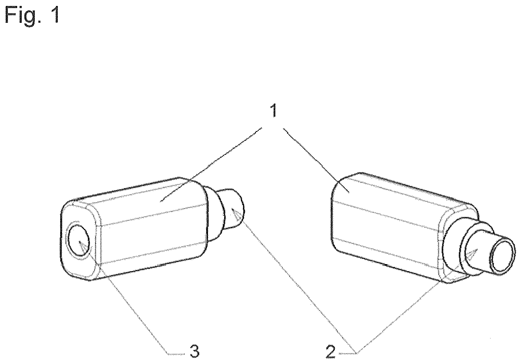

Figur 1 zeigt einen Sensor 1 zur Ermittlung von Prozess- und/oder Zustandsgrößen, der mit einer Schnittstelle 2 zum Kontakt mit dem zu messenden Medium ausgestattet ist. Als Prozess- oder Zustandsgrößen sind Temperatur, Feuchte, Druck, Schall oder Vibrationen/Schwingungen, Fließgeschwindigkeit oder Lichtabsorption feststellbar. Der Sensor 1 ist hierfür mit einem oder mehreren entsprechenden Mitteln zur Datenerfassung ausgestattet. Weiter ist der Sensor 1 mit einer weiteren Schnittstelle 3 ausgestattet, die eine Weitergabe der Messdaten ermöglicht. Hierbei kann es sich um eine Anzeige der Messwerte handeln. Ebenso kann eine kabelgebundene oder drahtlose Weitergabe der Messdaten an eine weiterverarbeitende Einheit über diese Schnittstelle erfolgen.

Eine Anzeige kann von einer einfachen digitalen AN/AUS Darstellung bis hin zu vollumfänglichen Messwertangaben inklusive Zeitreihen vorgesehen sein. Wichtiger wird bei diesem Sensor aber eine Weitergabe der Daten an eine übergeordnete Datenverarbeitungseinheit sein. Dazu werden die Daten in dem Sensor 1 eventuell noch durch Filter aufbereitet und dann weitergeleitet. Hierzu bietet sich als einfachste Möglichkeit eine kabelgebundene Übertragung an. Hierfür müsste dann im Sensor 1 als Schnittstelle 2 eine Anschlussverbindung vorgesehen sein. Dies hätte den Vorteil, dass die Verbindung einfach und kostengünstig ausgestaltet ist. Weiter ist eine Energieversorgung des Sensors 1 über die Leitungen möglich. Speziell in sicherheitskritischen Bereichen ist die kabelgebundene Kommunikation sehr unempfindlich.

Mit geeigneten Mitteln ist es aber auch möglich, die Schnittstelle 3 per Funktübertragung zu betreiben. Hierfür ist der Aufwand bei der Verkabelung geringer.

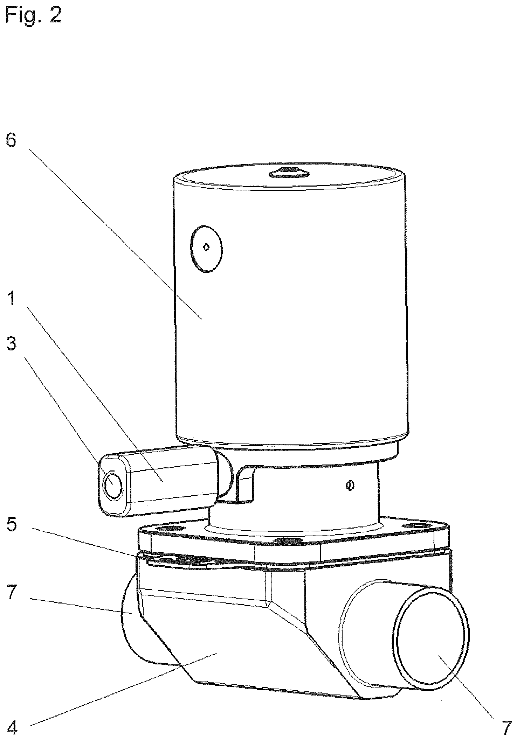

Die Figur 2 zeigt ein Membranventil 4 mit Anschlüssen 7, wobei ein Einlass und ein Auslass vorgesehen sind. Das Membranventil verfügt über eine Membran 5, die mittels einer Pneumatikeinheit 6 bewegt wird. Die Zu- und Ablaufleitungen der Pneumatikeinheit 6 sind in der Figur 2 nicht dargestellt. An der Pneumatikeinheit 6 ist ein Sensor 1 erfindungsgemäß vorgesehen.

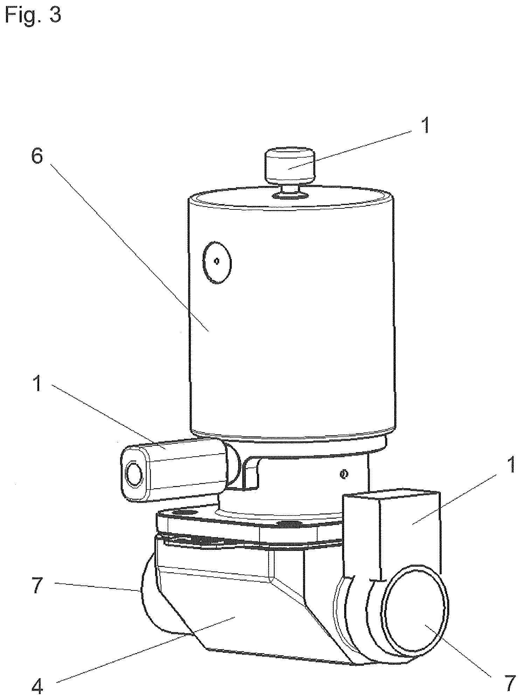

Beispielhaft zeigt die Figur3 verschiedene Ein- und Anbauorte für den Sensor 1 am Membranventil 4. Je nach Lage können mit den Messwertaufnehmern Prozess- und/oder Zustandsgrößen in der Pneumatikeinheit, in der Umgebung und/oder im Fördermedium aufgenommen werden

### Bezugszeichenliste

- 1: Sensor
- 2: Schnittstelle (Zustandsgrößen)
- 3: Schnittstelle (Daten)
- 4: Membranventil
- 5: Membran
- 6: Pneumatikeinheit
- 7: Anschluss

## Patentansprüche

1. Steuerluftanschluss einer Pneumatikeinheit, wobei der Steuerluftanschluss mindestens ein Mittel zur Datenerfassung, insbesondere durch mindestens einen Sensor, und mindestens ein Mittel zum Datenaustausch umfasst, wobei das Mittel zur Datenerfassung Zustandsgrößen innerhalb und/oder außerhalb der Steuerluft und/oder an benachbarten Bauteilen erfasst.

2. Steuerluftanschluss nach Anspruch 1, **dadurch gekennzeichnet, dass** das mindestens eine Mittel zur Datenerfassung mindestens ein Sensor ist.

3. Steuerluftanschluss nach Anspruch 1 oder 2, **dadurch gekennzeichnet, dass** der Sensor ein Temperaturaufnehmer ist.

4. Steuerluftanschluss nach Anspruch 1 oder 2, **dadurch gekennzeichnet, dass** der Sensor ein Druckaufnehmer ist.

5. Steuerluftanschluss nach Anspruch 1 oder 2, **dadurch gekennzeichnet, dass** der Sensor ein Feuchtigkeitsaufnehmer ist.

6. Steuerluftanschluss nach Anspruch 1 oder 2, **dadurch gekennzeichnet, dass** der Sensor ein Schwingungsaufnehmer ist.

7. Steuerluftanschluss nach Anspruch 1 oder 2, **dadurch gekennzeichnet, dass** der Sensor ein Schallaufnehmer ist.

8. Steuerluftanschluss nach Anspruch 1 oder 2, **dadurch gekennzeichnet, dass** der Sensor ein Durchflussaufnehmer ist.

9. Steuerluftanschluss nach einem der Ansprüche 1 bis 8, **dadurch gekennzeichnet, dass** ein jeweils paralleler Sensor Zustandsgrößen der Umgebung aufnimmt.

10. Steuerluftanschluss nach einem der Ansprüche 1 bis 9, **dadurch gekennzeichnet, dass** ein jeweils paralleler Sensor Zustandsgrößen der Pneumatikeinheit aufnimmt.

11. Steuerluftanschluss nach einem der Ansprüche 1 bis 10, **dadurch gekennzeichnet, dass** das Mittel zur Datenübertragung ein Funkkommunikationsmittel ist, insbesondere ein Nahfeldfunkmittel.

12. Steuerluftanschluss nach einem der Ansprüche 1 bis 11, **dadurch gekennzeichnet, dass** eine Auswerteeinheit vorgesehen ist, wobei die Auswerteeinheit Regeln zur Datenanalyse umfasst.

13. Verfahren zur Überwachung eines Steuerluftanschlusses nach einem der vorgehenden Ansprüche, **dadurch gekennzeichnet, dass** mit den Mitteln zur Datenerfassung mindestens eine Zustandsgröße in oder an dem Steuerluftanschluss aufgenommen wird und mittels der Mittel zur Datenübertragung an eine zentrale Steuereinheit übertragen werden.

14. Verfahren nach Anspruch 13, **dadurch gekennzeichnet, dass** die die erfassten Daten in einer Auswerteeinheit ausgewertet werden und das Auswerteergebnis mittels der Mittel zur Datenübertragung an eine zentrale Steuereinheit übertragen werden.

15. Verfahren nach einem der Ansprüche 13 bis 14, **dadurch gekennzeichnet, dass** die Auswerteeinheit Anomalien gegenüber einem hinterlegten Verhalten erfasst.

16. Verfahren nach einem der Ansprüche 13 bis 15, **dadurch gekennzeichnet, dass** die Auswerteeinheit einen Datenspeicher für Kenndaten des Antriebs und/oder des betätigten Bauteils aufweist.

17. Verfahren nach einem der Ansprüche 13 bis 16, **dadurch gekennzeichnet, dass** eine Analyse durchgeführt wird, die geringfügige und/oder dauerhaft wirkende und/oder kurzzeitige intensive und/oder schwellende und/oder strukturiert auftretende Anomalien erfasst, die im normalen Betrieb nicht vorkommen.
